(19) Europäisches Patentamt
European Patent Office
Office européen des brevets

(11) **EP 4 357 163 B1**

(12) **EUROPEAN PATENT SPECIFICATION**

(45) Date of publication and mention
of the grant of the patent:
**06.05.2026   Bulletin 2026/19**

(21) Application number: **22824565.0**

(22) Date of filing: **11.03.2022**

(51) International Patent Classification (IPC):
**B60C 11/12** *(2006.01)*       **B60C 11/03** *(2006.01)*
**B60C 11/11** *(2006.01)*

(52) Cooperative Patent Classification (CPC):
**B60C 11/0306; B60C 11/11; B60C 11/12;
B60C 11/1204; B60C 11/1236; B60C 11/1272;**
B60C 2011/0344; B60C 2011/0346;
B60C 2011/1209; B60C 2011/1227;
B60C 2011/1245

(86) International application number:
**PCT/JP2022/011053**

(87) International publication number:
**WO 2022/264566 (22.12.2022 Gazette 2022/51)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.06.2021   JP 2021101632**

(43) Date of publication of application:
**24.04.2024   Bulletin 2024/17**

(73) Proprietor: **BRIDGESTONE CORPORATION**
**Chuo-ku**
**Tokyo 104-8340 (JP)**

(72) Inventor: **HAYASHI, Shintaro**
**Chuo-ku, Tokyo 104-8340 (JP)**

(74) Representative: **Marks & Clerk LLP**
**15 Fetter Lane**
**London EC4A 1BW (GB)**

(56) References cited:
EP-B1- 2 987 655          WO-A1-2014/061514
WO-A1-2014/061514     WO-A1-2018/043553
DE-A1- 102019 211 420   DE-B4- 102005 030 566
JP-A- 2002 219 910        JP-A- 2021 070 332
JP-A- H0 390 317

## Description

TECHNICAL FIELD

The present invention relates to a tire that utilizes a tread pattern with blocks having a relatively small ground area are densely disposed.

BACKGROUND ART

Conventionally, a method of utilizing a tread pattern with blocks having a relatively small ground area are densely disposed is known for a winter tire (hereinafter denoted as "tire") suitable for traveling on an ice and snow road surface (see PTL 1). PTL 2 discloses a pneumatic tire which has blocks which are separated by circumferential grooves extending in the circumferential direction of the tire, and also by lug grooves extending oblique to the circumferential direction of the tire and each having two or more bent sections. PTL 3 discloses a pneumatic tire, with transverse channels formed on the running surface, which has narrow grooves, shallower and wider than the channels, formed at an angle to the transverse direction of the tire and with the density of the narrow grooves increasing from a central region towards a shoulder region. PTL 4 discloses a pneumatic tire that can be suppressed from being unevenly worn and can be improved in on-snow performance.

The tread pattern in which such small blocks are densely disposed has a better ground contact characteristics with the ice and snow road surface than blocks of a general size, and therefore can improve traveling performance on the ice and snow road surface (hereinafter denoted as "on-ice performance").

CITATION LIST

PATENT LITERATURE

[PTL 1] JP 2017-193202 A
[PTL 2] WO 2014/061514 A1
[PTL 3] DE 10 2005 030566 B4
[PTL 4] JP 2021 070332 A

SUMMARY OF INVENTION

However, further improvement is required for the conventional tire described above. Specifically, it is required to further improve on-ice performance, especially braking performance on snow and ice roads during cornering.

Therefore, an object of the present invention is to provide a tire that further improves braking performance on snow and ice roads during cornering when utilizing a tread pattern with blocks having a relatively small ground area are densely disposed.

A tire according to the present invention includes block rows delimited by a pair of circumferential grooves extending in a tire circumferential direction. The block rows include a plurality of blocks delimited by a plurality of lateral grooves extending in a tire width direction. Each block of the plurality of blocks is partitioned into a plurality of small blocks by a circumferential sipe extending in the tire circumferential direction and a plurality of lateral sipes extending in the tire width direction. The circumferential sipe extends along the tire circumferential direction. The plurality of lateral sipes include a first lateral sipe and a second lateral sipe extending in different directions from each other. Each block included in at least one of the block rows has a triangular shape in a tread plane view. Each small block of the plurality of small blocks included in the each block included in the at least one of the block rows has a triangular shape in the tread plane view.

In the tire with the above configuration, each block included in the block row is partitioned into the plurality of small blocks by the circumferential sipe extending parallel to the tire circumferential direction, and the plurality of lateral sipes including the first lateral sipe and the second lateral sipe extending in different directions from each other. In this configuration, during cornering, each small block not only supports a small block adjacent to the tire width direction but also supports a small block adjacent to the tire circumferential direction, thereby increase a flexural rigidity of each block in the tire width direction. By increasing the flexural rigidity, the ground contact characteristics of the tire during braking is improved.

Therefore, according to the tire described above, in the case where a tread pattern with blocks having a relatively small ground area are densely disposed is utilized, braking performance on a snow and ice road during cornering can be further improved.

BRIEF DESCRIPTION OF DRAWINGS

[FIG. 1] FIG. 1 is a partial plan view of a tread of a pneumatic tire 10.
[FIG. 2] FIG. 2 is a partial enlarged plan view of the tread 20.
[FIG. 3] FIG. 3 is a partial cross-sectional view of a block 100 including a circumferential sipe 120 (lateral sipe 130) along a sipe width direction and a tire radial direction TR.
[FIG. 4] FIG. 4 is a partial plan view of a tread of a pneumatic tire 10A not according to the invention, but useful for understanding the present invention.
[FIG. 5] FIG. 5 is a partial plan view of a tread of a pneumatic tire 10B according to a variant 1.

MODES FOR CARRYING OUT THE INVENTION

Hereinafter, embodiments will be described based on the drawings. Same functions and structures are denoted by the same or similar reference numerals, and the description thereof will be omitted accordingly.

(1)Overall schematic structure of tire

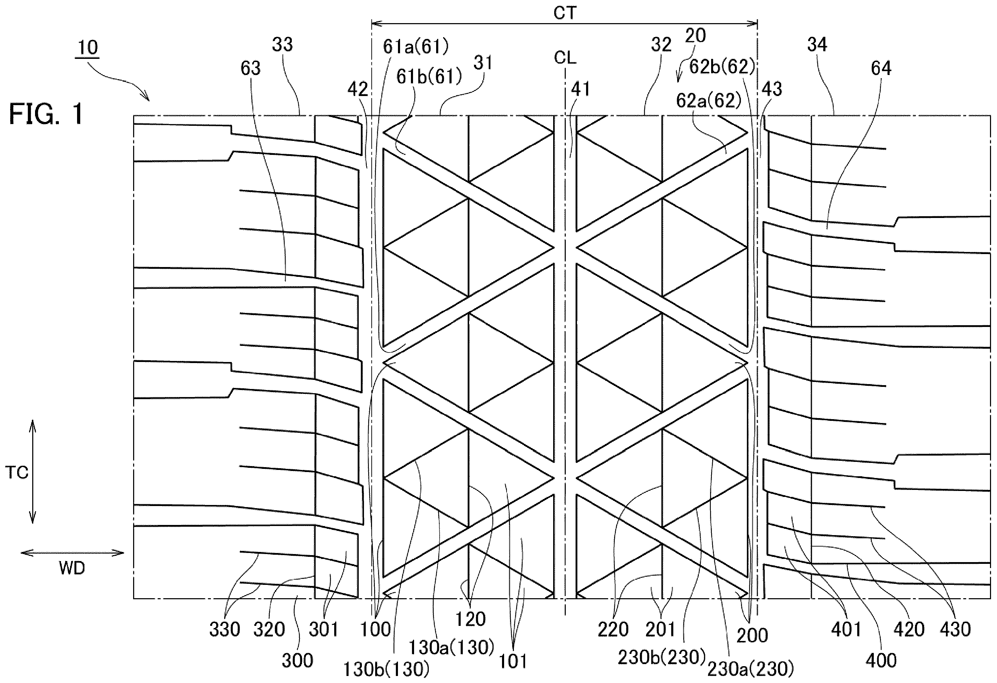

FIG. 1 is a partial plan view of a tread of a pneumatic tire 10 according to a first embodiment.
The pneumatic tire 10 is a so-called winter tire configured to travel on an ice and snow road surface, specifically, an ice road surface or/and a snow road surface, and is also called a studless tire. The pneumatic tire 10 may be an all-season tire configured to of travel on a non-ice or snow road surface (a wet road surface and a dry road surface) and an ice and snow road surface. Alternatively, the pneumatic tire 10 may be a general summer tire rather than the winter tire or the all-season tire.
Also, a type of a vehicle in which the pneumatic tire 10 is mounted may be mainly, but not particularly limited to, passenger vehicles (which may include SUVs and minivans).
The pneumatic tire 10 utilizes a tread pattern in which blocks having a relatively small ground area are densely disposed. Specifically, as illustrated in FIG. 1, the pneumatic tire 10 includes a plurality of block rows 31 and 32 extending in a tire circumferential direction TC. The block rows 31 and 32 are delimited by a pair of mutually adjacent circumferential grooves of the circumferential grooves 41, 42 and 43. The pneumatic tire 10 of the present embodiment also includes block rows 33 and 34 delimited by one circumferential groove (circumferential groove 42 or circumferential groove 43) and a tread end.
The tread 20 is a part configured to be in contact with a road surface. The tread pattern is formed on the tread 20 according to the use environment of the pneumatic tire 10 and the type of the vehicle to be mounted.
The tread 20 is provided with the circumferential groove 41 at a position including a tire equatorial line CL, and the block rows 31 and 32 are provided adjacent to the circumferential groove 41.
The block row 33 is provided outside the block row 31 in a tire width direction, and The block row 34 is provided outside the block row 32 in the tire width direction.
The block row 31 is delimited by a pair of circumferential grooves extending in the tire circumferential direction TC, specifically, which are the circumferential grooves 41 and the circumferential grooves 42.
The block row 32 is delimited by the circumferential grooves 41 and the circumferential grooves 43. Since the block rows 33 and 34 are provided in shoulder portions of the tread 20, no circumferential groove is formed on outsides in the tire width direction of the block rows 33 and 34.

(2) Shape of the block

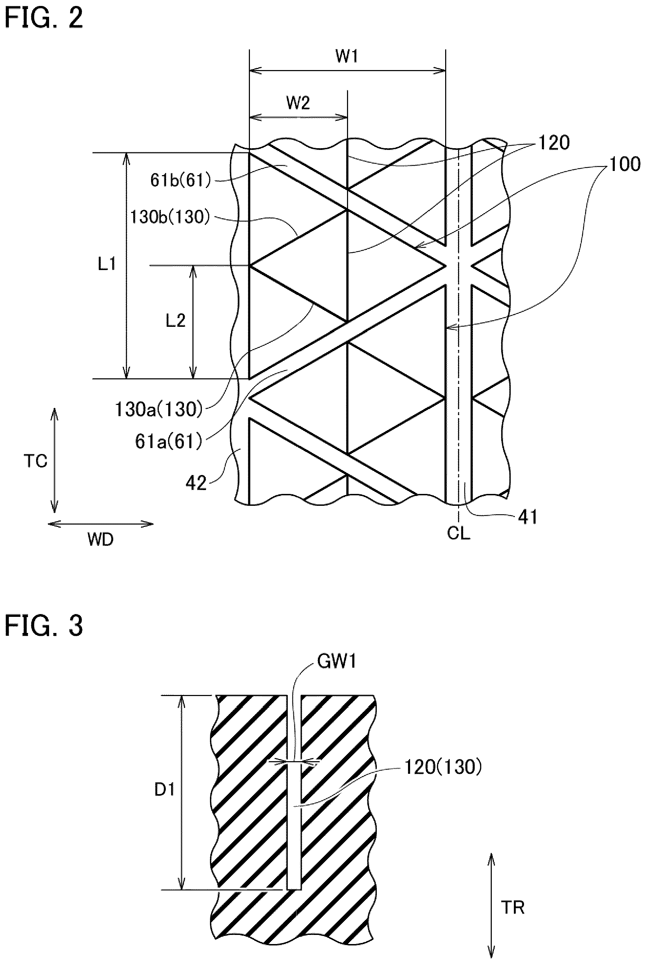

FIG. 2 is a partially enlarged plan view of the tread 20. As described above, the tread 20 is provided with the block rows extending in the tire circumferential direction TC. Each of the block rows includes a plurality of blocks configured to be in contact with the road surface.
Specifically, a block of the block rows includes a plurality of blocks delimited by a plurality of lateral grooves extending in a tire width direction WD. Specifically, the block row 31 includes the blocks 100, the block row 32 includes the blocks 200, the block row 33 includes the blocks 300, and the block row 34 includes the blocks 400.
The block 100 is delimited by lateral grooves 61a and 61b having different inclination directions with respect to the tire width direction WD. Specifically, the block row 31 is partitioned into a plurality of blocks 100 by alternately arranging lateral grooves 61a and 61b having different inclination directions in the circumferential direction TC.
The block 200 is similarly delimited by lateral grooves 62a and 62b having different inclination directions with respect to the tire width direction WD. The block row 32 is partitioned into a plurality of blocks 200 by alternately arranging lateral grooves 62a and 62b having different inclination directions in the circumferential direction TC. With this configuration, each block 100, 200 of the present embodiment is triangular in a tread plane view.

The block 300 is delimited by lateral grooves 63. The block 400 is delimited by lateral grooves 64.

The blocks 100 are partitioned into a plurality of small blocks 101 by circumferential sipes 120 extending in the tire circumferential direction TC and lateral sipes 130 extending in the tire width direction WD.

Specifically, the block 100 is partitioned into four small blocks 101 by one circumferential sipe 120 extending along the tire circumferential direction TC and two lateral sipes 130 extending in different directions from each other.

In the present embodiment, the small block 101 is formed in a columnar shape having a triangular shape in the tread plane view.

In the present embodiment, the circumferential sipe 120 is formed parallel to the tire circumferential direction TC. Each end of the circumferential sipe 120 communicates with one of the lateral grooves 61. Specifically, the ends of the circumferential sipe 120 communicate with the lateral grooves 61a and 61b adjacent to the block 100. The circumferential sipe 120 is provided so that the intermediate portion directly connects the lateral grooves 61a and 61b without communicating with the circumferential grooves 41 and 42.

Further, at least one end of the lateral sipe 130 communicates with any of the circumferential grooves 41 and 42. In the present embodiment, the lateral sipe 130 includes a first lateral sipe 130a having one end in communication with the circumferential groove 41 or the circumferential direction 42 and the other end in communication with the lateral groove 61a at a position where the circumferential sipe 120 communicates, and a second lateral sipe 130b having one end in communication with the circumferential groove 41 or the circumferential direction 42 and the other end in communication with the lateral groove 61b at a position where the circumferential sipe 120 communicates.

Further, in the present embodiment, the lateral grooves 61a and 61b and the lateral sipes 130a and 130b are inclined with respect to the tire width direction WD. Further, the lateral grooves 61a and the lateral sipes 130b are parallel in the tread plane view, and the lateral grooves 61b and the lateral sipes 130a are parallel in the tread plane view. That is, the inclination angle of the lateral grooves 61a (61b) with respect to the tire width direction WD and the inclination angle of the lateral sipes 130b (130a) with respect to the tire width direction WD are the same.

In this embodiment, the block 200 has a shape symmetrical to the block 100 with respect to the equatorial line CL, in the tread plane view.

As illustrated in FIG. 1, in the pneumatic tire 10, the block row 31 including the triangular block 100 in the tread plane view having the small block 101 with triangular columnar shape and the block row 32 including the triangular block 200 in the tread plane view having the small block 201 with triangular columnar shape are provided only in the center portion CT delimited by a pair of circumferential grooves 42, 43 positioned outermost in the tire width direction disposed on either side of the tire equatorial line CL.

The block 300 is partitioned into six small quadrangular blocks 301 in tread plane view by one circumferential sipe 320 and two lateral sipes 330.

An inner end of the lateral sipe 330 in the tire width direction communicates with the circumferential groove 42. Ends of the circumferential sipe 320 communicate with the lateral grooves 63 formed adjacent to the block 300.

The lateral groove 63 and the lateral sipe 330 are inclined with respect to the tire width direction WD. As illustrated in FIG. 1, parts on the circumferential groove 42 side of the lateral groove 63 and the lateral sipe 330 may be more inclined with respect to the tire width direction WD than other parts.

The block 400 is also partitioned into six small quadrangular blocks 401 in tread plane view by one circumferential sipe 420 and two lateral sipes 430.

An inner end of the lateral sipe 430 in the tire width direction communicates with the circumferential groove 43. Ends of the circumferential sipe 420 communicate with the lateral grooves 64 formed adjacent to the block 400.

The lateral groove 64 and the lateral sipe 430 are inclined with respect to the tire width direction WD. As illustrated in FIG. 1, parts on the circumferential groove 43 side of the lateral groove 64 and the lateral sipe 430 may be more inclined with respect to the tire width direction WD than other parts.

As illustrated in FIG. 1, the block 300 and the block 400 have a shape arranged to be point symmetric.

(3)Cross-sectional shape of the circumferential sipe and the lateral sipe

FIG. 3 is a partial cross-sectional view of a block 100 including the circumferential sipe 120 or the lateral sipe 130 along a sipe width direction and a tire radial direction TR.

The circumferential sipes 220 formed at least in the blocks 200 have cross sectional shapes similar to that of the circumferential sipe 120 formed in the blocks 100. The lateral sipes 230 have cross sectional shapes similar to that of the lateral sipe 130.

As illustrated in FIG. 3, the circumferential sipe 120 and the lateral sipe 130 have a constant groove width GW1 from the tread side to the bottom. Specifically, cross-sectional shapes in cross sections along the sipe width direction and the tire radial direction TR of the circumferential sipe 120 and the lateral sipe 130 are formed to extend linearly along the tire radial direction TR and have substantially parallel groove walls.

The sipe is a fine groove in the block configured to close when the block is grounded. A width of the sipe in a non-grounded state is preferably, but not particularly limited to, 0.1 mm to 1.5 mm, and more preferably 0.4 mm to 0.7 mm.

In this embodiment, depth D1 of the circumferential sipe 120 and the lateral sipe 130 are set to be about 5.0 mm, and the groove width GW1 are set to be about 0.4 mm.

(4) Dimensions and flexural rigidity of the block

Since the blocks 200 have shapes generally similar to that of the block 100 as described above, the dimensions and flexural rigidity of the blocks will now be described with reference to the block 100 illustrated in FIG. 2.

As illustrated in FIG. 2, a ratio W2/W1 between a width W2 of the small block 101 in the tire width direction and the width W1 of the block 100 in the tire width direction is 0.25 or more and 0.50 or less. A ratio L2/L1 between a length L2 of the small block 101 in the tire circumferential direction TC and the length L1 of the block 100 in the tire circumferential direction TC is 0.1 or more and 0.5 or less.

As illustrated in FIG. 2, the width W1, the width W2, the length L1, and the length L2 are based on the tire width direction WD and the tire circumferential direction TC.

A height of the block 100, that is, depths of the circumferential grooves 41, 42 and the circumferential groove 61 in the block 100 may not be constant, but may be about 6 mm to 12 mm.

A cross-sectional secondary moment in a height direction of the small block 101 is not less than 150 $(mm^4)$ and not more than 2200 $(mm^4)$. The preferred range of the width W2 and the length L2 of the small block 101 is width W2 = 6mm to 15mm and length L2 = 6mm to 15mm.

The cross-sectional second moment is preferably 300 $(mm^4)$ to 1500 $(mm^4)$ and more preferably 500 $(mm^4)$ to 1000 $(mm^4)$. The block 100 is formed in a triangular shape in the tread plane view, and the cross-sectional second moment of the block 100 is obtained by Equation 1.

$$\text{Cross-sectional second moment } I = L2 * W2^3 / 36 \qquad \text{(Equation 1)}$$

A relationship between the length L2 and the width W2 of the small block 101 is preferably $1.0 \leq L2/W2 \leq 1.5$. By setting L2/W2 to 1.0 or more, the ground contact characteristics is improved and the on-ice performance is improved. In addition, by setting L2/W2 to 1.5 or less, water generated on a road surface R can be dewatered, and the on-ice performance is improved.

(5)Action and effect

According to the first embodiment above-described, following action effects can be obtained. Specifically, the block 100 is partitioned into a plurality of small blocks 101 by the circumferential sipes 120 and the lateral sipes 130. The circumferential sipe 120 and the lateral sipe 130 have a constant groove width GW1 from the tread side to the bottom (the block 200 has similar shape).

That is, since the circumferential sipe 120 and the lateral sipe 130 having a constant groove width GW1 extend to the bottom in the tire circumferential direction TC and the tire width direction WD, respectively, the edge pressure at an end part in the tire circumferential direction TC and the tire width direction WD of the block 100 can be secured.

Since a block edge portion of the block 100 is divided (delimited) by the circumferential sipe 120, a water removal performance from the tread of the block 100 can also be ensured.

In addition, sufficient edge pressure is secured in the small block 101 forming the end part of the block 100 in the tire circumferential direction TC as described above. Accordingly, especially a traction on the ice/snow road surface increases, and the braking and driving performance can be effectively enhanced. Furthermore, the other small block 101 provided at a rear of the small block 101 forming the end part of the block 100 in the tire circumferential direction TC can firmly contact the road surface.

Thus, each of the plurality of small blocks 101 does not aim at "ground contact characteristics", "edge effect" and "water removal (drainage) ", but shares roles of "ground contact characteristics", "edge effect " and" water removal (drainage) " for each small block 101 as described above.

Thus, according to the pneumatic tire 10, the on-ice performance can be improved when a tread pattern in which blocks having a relatively small ground area are densely disposed is utilized.

Further, in the present embodiment, the size ratio W2/W1 between the small block 101 and the block 100 is 0.25 or more and 0.50 or less, and the cross-sectional second moment in the height direction of the block 100 alone is 150 $(mm^4)$ or more and 2200 $(mm^4)$ or less.

Therefore, the respective performances of "ground contact characteristics", "edge effect", and "water removal (drainage)" can be achieved in high dimensions. Since the W2/W1 is 0.25 or more, sufficient ground contact characteristics and edge effect can be achieved without the size of the small block 101 being too small. Further, since the size of the small block 101 is not too large since the W2/W1 is 0.50 or less, sufficient ground contact characteristics can be achieved.

According to the pneumatic tire 10, by setting the dimension ratio W2/W1 and the flexural rigidity of single block 100 to be within the ranges described above, it is possible to enhance driving performance such as braking-driving performance and steering stability including not only on ice and snow road surfaces but also on dry road surfaces. That is, according to the pneumatic tire 10, even higher driving performance can be achieved when utilizing the tread pattern in which blocks having the relatively small ground area are densely disposed.

In the present embodiment, the small block 101 (and other small blocks and blocks are generally similar) has a triangular columnar shape in the tread plane view. Therefore, the adjacent small blocks 101 efficiently supports each other across the circumferential sipes 120 and the lateral sipes 130. In particular, a braking performance on a snow and ice road during cornering is such that the respective small blocks 101 not only support each other with the small blocks 101 adjacent to the tire width direction WD but also support each other with the small blocks 101 adjacent to the tire circumference direction TC during braking, so that the flexural rigidity of the tire width direction WD for each block 100 is enhanced. By enhancing the flexural rigidity of the tire width direction WD, the ground contact characteristics of the tire during braking while cornering is further improved.

In this embodiment, the ends of the lateral sipe 130 communicate with the circumferential groove 41 or the circumferential groove 42 and the lateral groove 61 formed adjacent to the block 100. The ends of the circumferential sipe 120 communicates with the lateral grooves 61 formed adjacent to the block 100. As a result, sufficient water removal performance can be achieved while securing the rigidity (block rigidity) of the block 100.

In this embodiment, the small block 101 is formed in the columnar shape having the triangular shape in the tread plane view. Since snow tends to be collected at the position where the sipes 120,130 intersect, the friction performance on snow can be improved by the configuration.

In this embodiment, the lateral groove 61 and the lateral sipe 130 are inclined with respect to the tire width direction WD, and the lateral groove 61 and the lateral sipe 130 are parallel. As a result, partial wear of the block 100 and noise (pattern excitation sound) generated when the block 100 touches the road surface R can be suppressed.

(6) Other Embodiments

Although the first embodiment has been described above, it is not limited to the description of the embodiments, and it is obvious to those skilled in the art that various modifications and improvements can be made as claimed.

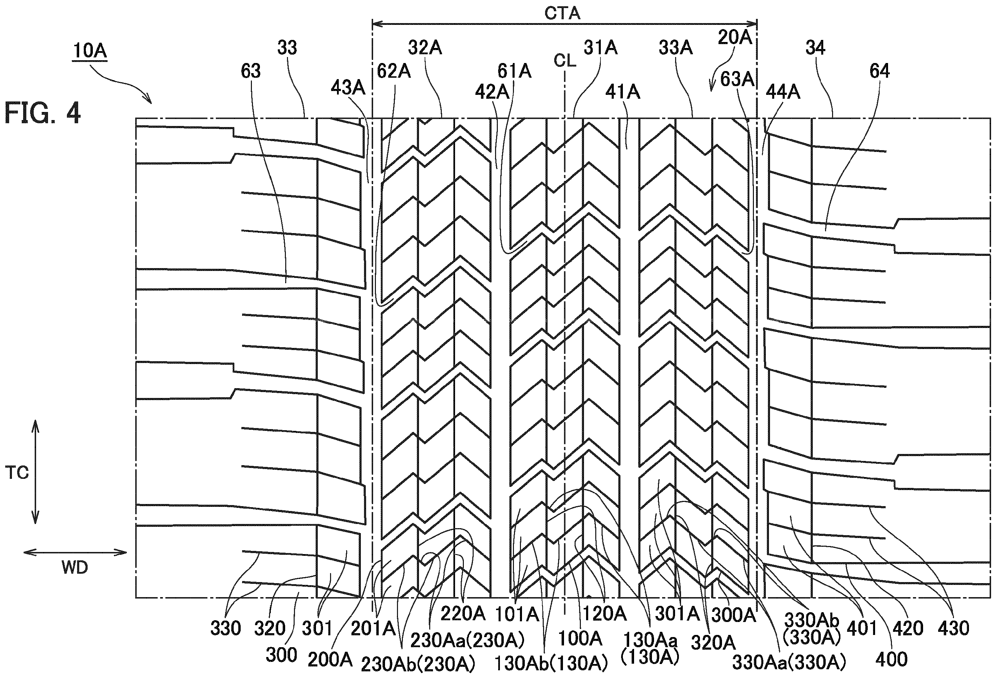

For example, the tread pattern of the pneumatic tire 10 described above may be changed as follows. FIG. 4 is a partial plan view of a tread 20A of a pneumatic tire 10A not according to the invention, but useful for understanding the present invention.

As illustrated in FIG. 4, the pneumatic tire 10A includes block rows 31A, 32A, and 33A. The block row 31A includes a block 100A, the block row 32A includes a block 200A, and the block row 33A includes a block 300A.

Since the block row 32A and the block row 33A have shapes generally similar to that of the block row 31A, the block shapes of the block rows will be explained by referring to the blocks 100A of the block row 31A.

As illustrated in FIG. 4, the block 100A is formed into a plurality of small blocks 101A delimited by circumferential sipes 120A and lateral sipes 130A, each having a substantially V-shaped with an angle part in the tire circumferential direction in the tread plane view.

In the embodiment of FIG. 4 not according to the invention, edges in the tire width direction WD of each small block 101A extends along the tire circumferential direction TC and are formed to have same length on both sides in the tire width direction WD. Edges of each small block 101A in the tire circumferential direction are parallel to each other.

In the block 100A of the embodiment not according to the invention, the small blocks 101A are arranged adjacent to each other in the tire width direction WD and in the tire circumferential direction TC, and the circumferential sipes 120A extends parallel to the tire circumferential direction TC in the block 100A, and both ends open to the lateral grooves 61A adjacent to the block 100A. The lateral sipe 130A extends in a zigzag shape in the block 100A, and both ends open to the circumferential grooves 41A and 42A adjacent to the block 100A.

Thus, in the embodiment not according to the invention, the block 100A is formed in a shape in which a plurality of small blocks 101A having a substantially V-shape are arranged adjacent to each other in the tire width direction WD and the tire circumferential direction TC. In the block 100A, the circumferential sipes 120A extend parallel to the tire circumferential direction TC and open to the lateral grooves 61A adjacent at both ends. The lateral sipes 130A extend in the block 100A in a zigzag shape and open to the circumferential grooves 41A and 42A adjacent at both ends. The block 100A is partitioned into a plurality of substantially V-shaped small blocks 101A by the circumferential sipes 120A and 120 A.

Specifically, in the embodiment not according to the invention, since the substantially V-shaped small blocks 101A are delimited adjacent to each other in the tire width direction WD and the tire circumference direction TC, first lateral sipes 130Aa and second lateral sipes 130Ab extending in different directions are connected to each other at ends to form a single zigzag-like lateral sipe 130A. Note that the first lateral sipes 130Aa and the second lateral sipes 130Ab form angle parts in tire circumference direction TC of the substantially V-shaped small blocks 101A.

As illustrated in FIG. 4, even in the pneumatic tire 10A, the block rows 31A, 32A, and 33A are provided only in the center portion CTA delimited by a pair of circumferential grooves 43A and 44A positioned outermost in the tire width direction disposed on either side of the tire equatorial line CL.

According to the pneumatic tire 10A of the embodiment not according to the invention, the lateral sipes 130A extend in a zigzag shape in the block 100A. Therefore, during cornering, each block not only supports adjacent two small blocks 101A in the tire width direction WD but also supports adjacent small block in the tire circumferential direction TC, thereby increasing the flexural rigidity of each block in the tire width direction. By increasing the flexural rigidity in this way, the ground contact characteristics of the tire is improved, and the braking property on the ice and snow road during cornering is improved.

Further, in the pneumatic tire 10A according to the embodiment not according to the invention, each small block 101A in the block 100A delimited by the circumferential sipe 120A and the lateral sipe 130A is formed in a substantially V-shape having an angle part in the tire circumferential direction in the tread plane view. Therefore, the ground contact characteristics can be improved by effectively suppressing a decrease of the ground contact characteristics at the acute angle portion of the small block, and the braking property on the ice and snow road can be improved.

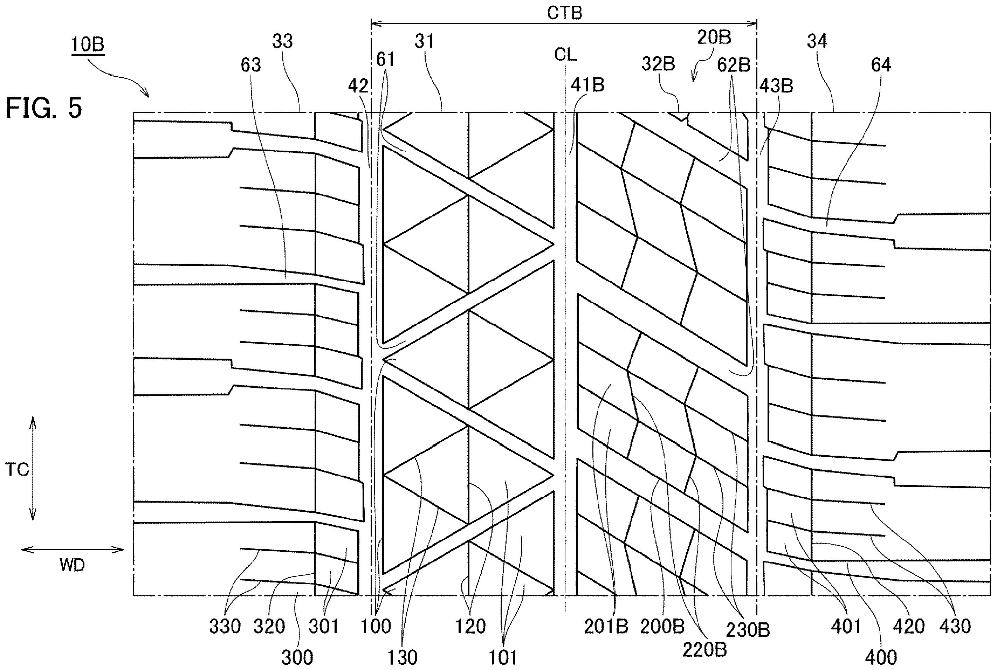

FIG. 5 is a partial plan view of a tread 20B of the pneumatic tire 10B according to a variant 1.

As illustrated in FIG. 5, the pneumatic tire 10B includes block row 31. Block row 31 includes block 100.

As illustrated in the variant 1 of FIG. 5, in place of block 200 included in block row 32 of pneumatic tire 10 of the embodiment, the pneumatic tire 10B includes blocks 200B partitioned into a plurality of small blocks by a circumferential sipe 220B extending in a zigzag shape and a plurality of lateral sipes 230B extending in parallel to the tire width direction WD, included in a block row 32B.

## Claims

1. A tire (10, 10b) comprising block rows (31, 32) delimited by a pair of circumferential grooves (41 -43, 41B, 43B) extending in a tire circumferential direction (TC), wherein

   the block rows (31, 32) include a plurality of blocks (100, 200) delimited by a plurality of lateral grooves (61 [61a, 61b], 62 [62a, 62b])extending in a tire width direction (WD),
   each block (100, 200) of the plurality of blocks (100, 200) is partitioned into a plurality of small blocks (101, 201) by a circumferential sipe (120, 220) extending in the tire circumferential direction (TC) and a plurality of lateral sipes (130, 230) extending in the tire width direction (WD),
   the circumferential sipe (120, 220) extends along the tire circumferential direction (TC),
   the plurality of lateral sipes (130, 230) include a first lateral sipe (130a, 230a)and a second lateral sipe (130b, 230b) extending in different directions from each other,
   the each block (100, 200) included in at least one of the block rows (31, 32) has a triangular shape in a tread plane view, and
   each small block (101, 201) of the plurality of small blocks (101, 201) included in the each block (100, 200) included in the at least one of the block rows (31, 32) has a triangular shape in the tread plane view.

2. The tire (10, 10B) according to claim 1, wherein
   the at least one of the block rows (31, 32), which includes the plurality of blocks (100, 200) each having the triangular shape and including only the plurality of small blocks (101, 201) each having the triangular shape, is provided only on a center portion (CT, CTB) delimited by a pair of circumferential grooves (41-43, 41B) positioned outermost in the tire width direction (WD) disposed on either side of a tire equatorial line (CL).

3. The tire (10, 10B) according to claim 1 or claim 2, wherein

   the circumferential sipe (120, 220) has a constant groove width from a tread side to a bottom, and
   each of the plurality of lateral sipes (130, 230) has a constant groove width from the tread side to a bottom.

## Patentansprüche

1. Reifen (10, 10b), der Blockreihen (31, 32) umfasst, die durch ein Paar Umlaufrillen (41-43, 41B, 43B) begrenzt sind, die sich in einer Reifenumfangsrichtung (TC) erstrecken, wobei

die Blockreihen (31, 32) eine Vielzahl von Blöcken (100, 200) einschließen, die durch eine Vielzahl von seitlichen Rillen (61 [61a, 61b], 62 [62a, 62b]) begrenzt sind, die sich in Reifenbreitenrichtung (WD) erstrecken, jeder Block (100, 200) der Vielzahl von Blöcken (100, 200) durch eine sich in der Reifenumfangsrichtung (TC) erstreckende Umfangslamelle (120, 220) und eine Vielzahl von sich in der Reifenbreitenrichtung (WD) erstreckenden Seitenlamellen (130, 230) in eine Vielzahl kleiner Blöcke (101, 201) unterteilt ist, sich die Umfangslamelle (120, 220) entlang der Reifenumfangsrichtung (TC) erstreckt, die Vielzahl der Seitenlamellen (130, 230) eine erste Seitenlamelle (130a, 230a) und eine zweite Seitenlamelle (130b, 230b) einschließt, die sich in unterschiedliche Richtungen voneinander erstrecken, jeder Block (100, 200), der in mindestens einer der Blockreihen (31, 32) eingeschlossen ist, in der Laufflächenebenansicht eine dreieckige Form aufweist, und jeder kleine Block (101, 201) der Vielzahl kleiner Blöcke (101, 201), die in jedem Block (100, 200) eingeschlossen sind, der in mindestens einer der Blockreihen (31, 32) eingeschlossen ist, in der Laufflächenebenansicht eine dreieckige Form aufweist.

2. Reifen (10, 10B) nach Anspruch 1, wobei
die mindestens eine der Blockreihen (31, 32), die die Vielzahl von Blöcken (100, 200) einschließt, die jeweils die dreieckige Form aufweisen und nur die Vielzahl kleiner Blöcke (101, 201) einschließt, die jeweils die dreieckige Form aufweisen, nur auf einem Mittelabschnitt (CT, CTB) bereitgestellt ist, der von einem Paar Umlaufrillen (41-43, 41B) begrenzt ist, die der Reifenbreitenrichtung (WD) am äußersten positioniert ist und auf beiden Seiten einer Reifenäquatoriallinie (CL) angeordnet ist.

3. Reifen (10, 10B) nach Anspruch 1 oder Anspruch 2, wobei

die Umlauflamelle (120, 220) eine konstante Rillenbreite von der Laufflächenseite bis zu einem Boden aufweist und jede der Vielzahl von Seitenlamellen (130, 230) eine konstante Rillenbreite von der Laufflächenseite bis zu einem Boden aufweist.

## Revendications

1. Pneumatique (10, 10b) comprenant des colonnes de blocs (31, 32) délimitées par une paire de rainures circonférentielles (41 -43, 41B, 43B) s'étendant dans une direction circonférentielle du pneumatique (TC), dans lequel

les colonnes de blocs (31, 32) incluent une pluralité de blocs (100, 200) délimités par une pluralité de rainures latérales (61 [61a, 61b], 62 [62a, 62b]) s'étendant dans une direction de largeur du pneumatique (WD), chaque bloc (100, 200) de la pluralité de blocs (100, 200) est divisé en une pluralité de petits blocs (101, 201) par une lamelle circonférentielle (120, 220) s'étendant dans la direction circonférentielle du pneumatique (TC) et une pluralité de lamelles latérales (130, 230) s'étendant dans la direction de largeur du pneumatique (WD), la lamelle circonférentielle (120, 220) s'étend le long de la direction circonférentielle du pneumatique (TC), la pluralité de lamelles latérales (130, 230) inclut une première lamelle latérale (130a, 230a) et une seconde lamelle latérale (130b, 230b) s'étendant dans des directions différentes l'une de l'autre, chaque bloc (100, 200) inclus dans au moins une des colonnes de blocs (31, 32) présente une forme triangulaire dans une vue en plan de la bande de roulement, et chaque petit bloc (101, 201) de la pluralité de petits blocs (101, 201) inclus dans chaque bloc (100, 200) inclus dans la au moins une des colonnes de blocs (31, 32) présente une forme triangulaire dans la vue en plan de la bande de roulement.

2. Pneumatique (10, 10B) selon la revendication 1, dans lequel
la au moins une des colonnes de blocs (31, 32), qui inclut la pluralité de blocs (100, 200) présentant chacun la forme triangulaire et n'incluant que la pluralité de petits blocs (101, 201) présentant chacun la forme triangulaire, est prévue uniquement sur une partie centrale (CT, CTB) délimitée par une paire de rainures circonférentielles (41-43, 41B) positionnées le plus à l'extérieur dans la direction de largeur du pneumatique (WD) disposées de chaque côté d'une ligne équatoriale du pneumatique (CL).

3. Pneumatique (10, 10B) selon la revendication 1 ou la revendication 2, dans lequel

la lamelle circonférentielle (120, 220) présente une largeur de rainure constante d'un côté de la bande de roulement jusqu'à un fond, et
chacune de la pluralité de lamelles latérales (130, 230) présente une largeur de rainure constante du côté de la bande de roulement jusqu'à un fond.

FIG. 1

## FIG. 2

## FIG. 3

FIG. 4

FIG. 5

**EP 4 357 163 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017193202 A
- WO 2014061514 A1
- DE 102005030566 B4
- JP 2021070332 A